# EUROPEAN PATENT SPECIFICATION

(11) **EP 2 895 378 B1**
(45) Date of publication and mention of the grant of the patent: **02.01.2019**
(21) Application number: 13767144.2
(22) Date of filing: 10.09.2013
(51) Int. Cl.: B62B 9/28, B62B 9/12, B62B 7/00

(54) **STROLLER**
KINDERWAGEN
POUSSETTE

(30) Priority: 11.09.2012 NL 2009449
(43) Date of publication of application: 22.07.2015
(73) Proprietor: WF International B.V., 6675 BC Valburg (NL)
(72) Inventor: GRIM, Walter, 6675 BC Valburg (NL); TOUSSAINT, Fredericus, 6675 BC Valburg (NL)
(74) Representative: V.O.
(86) International application number: PCT/NL2013/050651
(87) International publication number: WO 2014/042524

(56) References cited:
- WO-A2-2008/135974
- ES-A1- 2 253 093
- US-A1- 2007 045 972
- US-A1- 2008 179 863
- US-A1- 2008 315 563
- US-B1- 6 443 467

## Description

### FIELD

The invention relates to a stroller.

### BACKGROUND OF THE INVENTION

Strollers are generally known and comprise a frame which comprises a push bar. Typically, a seat is mounted on the frame. Further, at least one front wheel assembly is connected to the frame. Most often, there are two front wheel assemblies which are pivotably connected to the frame. A front wheel assembly can comprise a single wheel or a pair of wheels arranged closely next to one another. The known strollers have at least two rear wheel assemblies which are connected to the frame. A rear wheel assembly also can comprise a single wheel or a pair of wheels arranged closely next to one another. In practice, a distance between a rotation axis of the at least one front wheel assemblies and a rotation axis of the rear wheel assemblies is referred to as the wheelbase. Often, for the purpose of putting the stroller in the trunk of a car, the rear wheel assemblies are detachably connected to the frame by means of a quick release, and the frame is collapsible, so that the stroller can be put away so as to take up relatively little space.

From practice, also strollers are known which comprise two seats. Variants are known where the seats, viewed in the driving direction, are arranged one behind the other (see to that end, for instance, EP 2 241 492 A2 and US 2010/0140902). US2010/0140902 mentions an additional frame with its own set of wheels, on which a second seat is fastened. The additional frame can be connected to the front of a normal stroller. In this condition, the known stroller has six wheels, which adversely affects the driving comfort and the maneuverability of the stroller. Moreover, it becomes practically impossible to get the thus extended stroller up onto a sidewalk because the known stroller can hardly if at all be tilted backwards anymore. Other variants shown in that publication involve additional fastening brackets, which are already provided on the frame and with which a second seat can be mounted on the frame. However, this leads to a relatively unstable stroller as the frame is mainly dimensioned for use with one seat. Moreover, the additional fastening brackets lead to a higher cost price of the stroller which is not worthwhile when, in practice, it appears that no second seat needs to be attached, for instance because there will not be a second infant or because a second infant is born by the time the first infant is already able to walk.

ES-2 253 093, forming the closest prior art document, and US2007/0045972 disclose stroller assemblies in which two strollers may be coupled to each other. For the stroller assemblies disclosed therein similar drawbacks hold true, i.e: (i) the driving comfort and the maneuverability of the stroller are not good due to the presence of six or eight wheel assemblies, and (ii) it is practically impossible to get the thus extended stroller up onto a sidewalk because the known stroller can hardly if at all be tilted backwards anymore. Moreover, the last-mentioned publications require the purchase of two strollers which are each independently useful for a single infant. Such a double purchase is of course costly and hence unfavorable from an economic viewpoint.

WO2008135974 discloses the ability to reversibly connect two independent strollers to a single stroller-unit and when doing so to have the ability to choose a desired state, either a side-by-side or longitudinal, "train" position. In addition to determining the state of two strollers, it is possible in accordance to the device of the present invention, by varying the swirl-angle of the seats to determine the direction-position of two children in connected strollers, either facing each other, facing opposite directions or partially facing each other.

Also, a stroller is known where the seats, viewed in the driving direction, are arranged next to each other (see, to that end, for instance US2011/272925). It is true that with such a stroller the stability issues have improved compared to the variants known from US2010/0140902. With the stroller known from US2011/272925, the track width between the front wheel assemblies mutually and the rear wheel assemblies mutually can be increased in that the crossbars in the frame are of telescopic design. Such a construction is relatively costly. When it is uncertain whether there will be a second infant in the short term, the cost price of this stroller is a barrier. After all, there may not be a second infant or the second infant may be born by the time the first infant is no longer transported in a stroller. In those circumstances a stroller with double seat is not needed and the telescopic provisions on the stroller remain unused. More than that, the telescopic provisions are then actually undesirable because they only add to the weight and the price of the stroller.

### SUMMARY OF THE INVENTION

An object of the invention is to provide a stroller which is very suitable to be purchased for one infant, because its look, that is, the overall appearance, the weight, the dimensions, and the cost price substantially correspond to a normal single stroller. Another object of the invention is to provide a stroller which can be made suitable for fitting an accessory thereon, such as a second seat, so that, when there is a second infant, it can be transported with the same stroller. It is then envisaged that, also in the condition where two seats are provided, the stroller offers a good stability and also remains properly maneuverable and has a comfortable driving performance.

To that end, the invention provides a stroller comprising:
- a collapsible frame which comprises a push bar;
- a seat which is mounted on the frame;
- at least one front wheel assembly which is connected to the frame;
- at least two rear wheel assemblies which, in a first condition of the stroller, are connected to the frame, wherein a distance between a rotation axis of the at least one front wheel assembly and a rotation axis of the rear wheel assemblies is referred to as first wheelbase, wherein the rear wheel assemblies are detachably connected to the frame;
- an adapter assembly which is connectable to the frame when the rear wheel assemblies are detached from the frame for bringing the stroller into a second condition, which adapter assembly comprises:
   ∘ a receiving provision for an accessory, such as a second seat, a cot, a car seat, a baggage box, a basket or a step up board;
   and wherein the adapter assembly comprises:
   ∘ a fastening provision for the rear wheel assemblies; or:
   ∘ its own set of rear wheel assemblies,
wherein, in the second condition of the stroller, a distance between the rotation axis of the at least one front wheel assembly and a rotation axis of the rear wheel assemblies connected to the adapter assembly is referred to as second wheelbase, wherein the second wheelbase is greater than the first wheelbase and wherein the stroller in the condition where the adapter assembly is connected to the frame has only two rear wheel assemblies and one or two front wheel assemblies so that the stroller only has three or four wheel assemblies.

In this context, a front wheel assembly and a rear wheel assembly are understood to mean not only a single front wheel or a single rear wheel, respectively, but also one front wheel pair or one rear wheel pair, respectively. The wheels of a front wheel pair or rear wheel pair are arranged closely next to one another and always remain coaxial. When a front wheel pair or the rear wheel pair is pivotally connected to the frame, both wheels from the pair will pivot together.

Such a stroller has the advantage that initially it can be bought without adapter assembly in case of a first infant. In effect, a conventional stroller is then involved, albeit that the wheels, optionally in combination with the wheel crossbar, are detachable therefrom. The wheelbase and the track width of the thus purchased stroller are as is customary and the weight is also as is customary nowadays for a single stroller. The fact that the rear wheel assemblies are detachable is advantageous from a viewpoint of space occupancy during storage of the stroller. This property is further enhanced in that the frame is collapsible in the usual manner. To the consumer, both in overall appearance and in cost price, the stroller without adapter assembly does not visibly differ from a normal stroller. When a second infant is born, or when a need arises to provide the stroller with an additional accessory, at a later stage, a cot, a car seat, a second seat, a baggage box and/or a basket can be purchased as accessories together with the adapter assembly. As the original rear wheel assemblies are removed from the stroller for placing the adapter set, and to the adapter set a replacement set of rear wheel assemblies is or will be connected, a stroller can be formed having a second wheelbase which is greater than the first wheelbase. This enlarged wheelbase provides the thus adapted stroller with additional stability against tilting in rearward direction. Further, the driving comfort remains particularly good because, as in conventional cases, only two rear wheel assemblies and one or two front wheel assemblies are involved. As, further, the adapter assembly and the accessory connected thereto are fastened behind the seat of the stroller that is already present, it remains possible to lift the front wheel assemblies with relatively little additional effort, so that the stroller can be brought with comparative ease from a lower level to a higher level, for instance from the roadway onto a sidewalk. Furthermore, the costs of an adapter assembly having, for instance, a second seat as an accessory can be kept considerably lower than the costs of a second stroller. At a relatively small investment - i.e. an investment that is considerably lower than that of a single stroller - a user can convert his originally normally priced single stroller into a double stroller with excellent driving properties and stability.

Further elaborations of the invention are described in the subclaims and will be further clarified in the following on the basis of an exemplary embodiment with reference to the drawing.

### BRIEF DESCRIPTION OF THE FIGURES

Fig. 1 shows a perspective view of an exemplary embodiment of a stroller in a first condition;
Fig. 2 shows detail II of Fig. 1;
Fig. 3 shows the exemplary embodiment of Fig. 1 in exploded view;
Fig. 4 shows detail IV of Fig. 3;
Fig. 5 shows an exemplary embodiment of the adapter assembly;
Fig. 6 shows a perspective exploded view of the exemplary embodiment of the stroller of Fig. 1 with the adapter assembly and a second seat as accessory;
Fig. 7 shows the exemplary embodiment of Fig. 6 in assembled condition;
Fig. 8 shows the exemplary embodiment of Fig. 1 in side view without adapter assembly and without seat; and
Fig. 9 shows the exemplary embodiment of Fig. 7 in side view with adapter assembly and with seat.

### DETAILED DESCRIPTION

In the following, various embodiments of the invention are described. Here, reference is made to the exemplary embodiment which is shown in the figures. In this exemplary embodiment, various embodiments of the invention are embodied. However, the embodiments can also be embodied in a different manner than represented in the example shown. Therefore, the exemplary embodiment which is represented in the drawing serves only for clarification and the invention is not limited to the exemplary embodiment described.

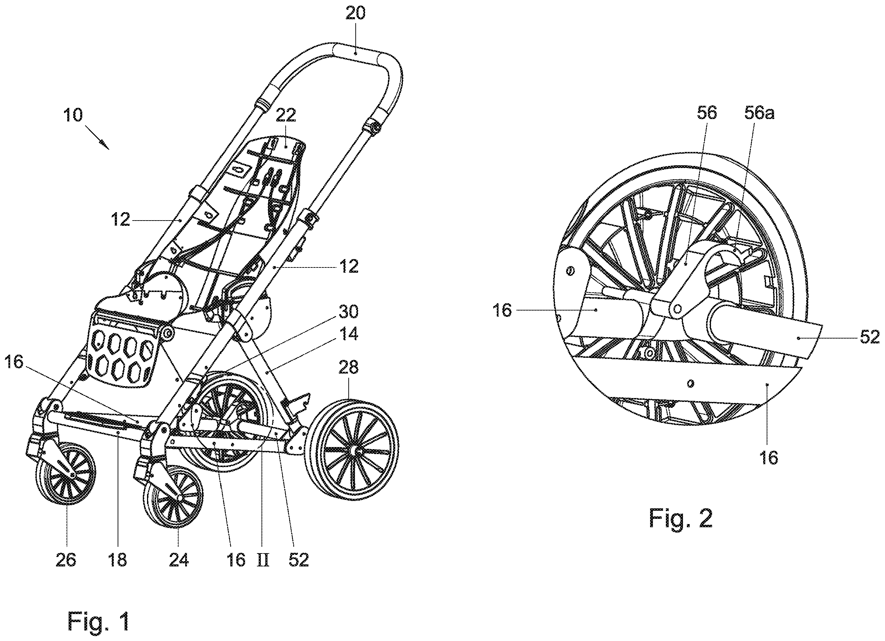

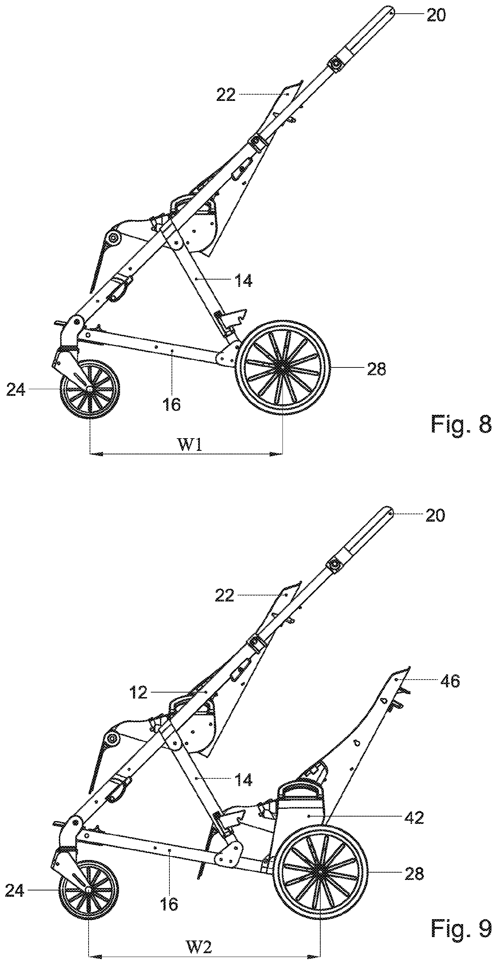

In the most general terms, the invention provides a stroller 10, comprising a frame 12-20 which includes a push bar 20. On the frame 12-20, a seat 22 is mounted. To the frame 12-20 is connected at least one front wheel assembly 24, 26. In the exemplary embodiment shown, these are two front wheel assemblies 24, 26 pivotable about two vertical pivots. In an alternative embodiment, however, a single centrally positioned front wheel assembly is also an option. It is also possible that a single front wheel assembly 24, 26 comprises a pair of wheels which are arranged closely next to one another and coaxially. The stroller 10 further comprises at least two rear wheel assemblies 28, 30 which are connected to the frame 12-20. As is the case with the front wheel assemblies 24, 26, it is also possible that a single rear wheel assembly 24, 26 comprises a pair of wheels which are arranged closely next to one another and coaxially. A distance between a rotation axis L_{front wheels} of the at least one front wheel assembly 24, 26 and a rotation axis L_{rear wheels} of the rear wheel assemblies 28, 30 is hereinafter referred to with the terminology "first wheelbase W₁" (see Fig. 8). The rear wheel assemblies 28, 30 are detachably connected to the frame 12-20. Characteristic of the stroller 10 according to the invention is that it comprises an adapter assembly 40 which is connectable to the frame 12-20 when and after the rear wheel assemblies 28, 30 have been detached from the frame 12-20. Fig. 1 shows the exemplary embodiment of the stroller 10 when it is in the first condition, i.e. in a condition with one seat 22 and no accessory 46 mounted thereon. The adapter assembly 40 is not yet present therein either.

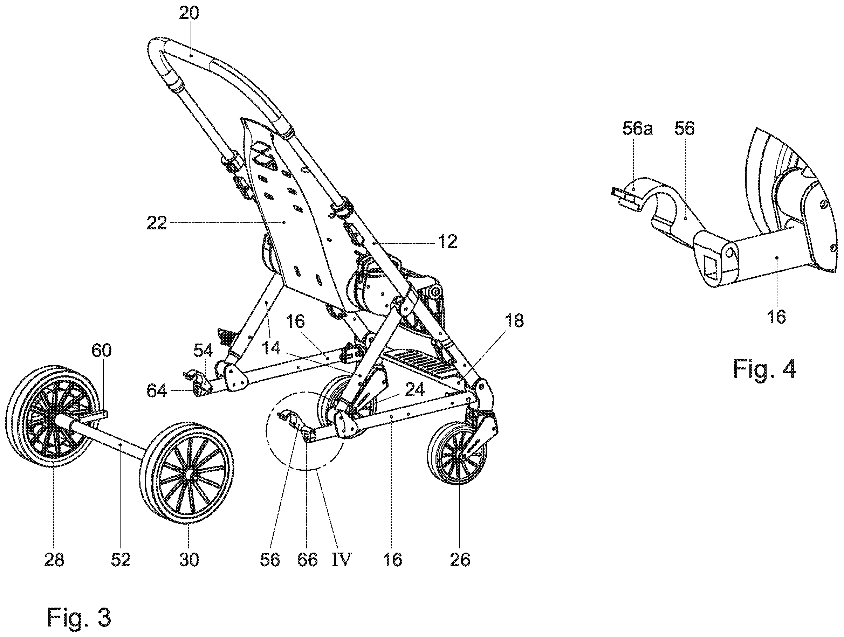

In Fig. 3, the rear wheel assemblies 28, 30 are detached from the frame 12-20.

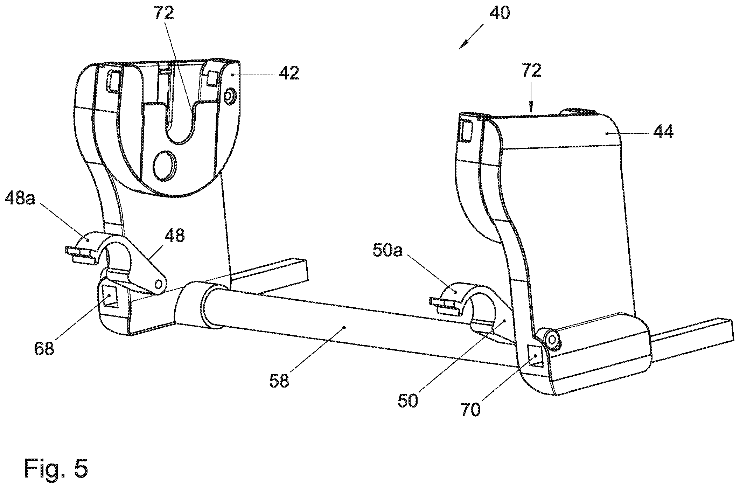

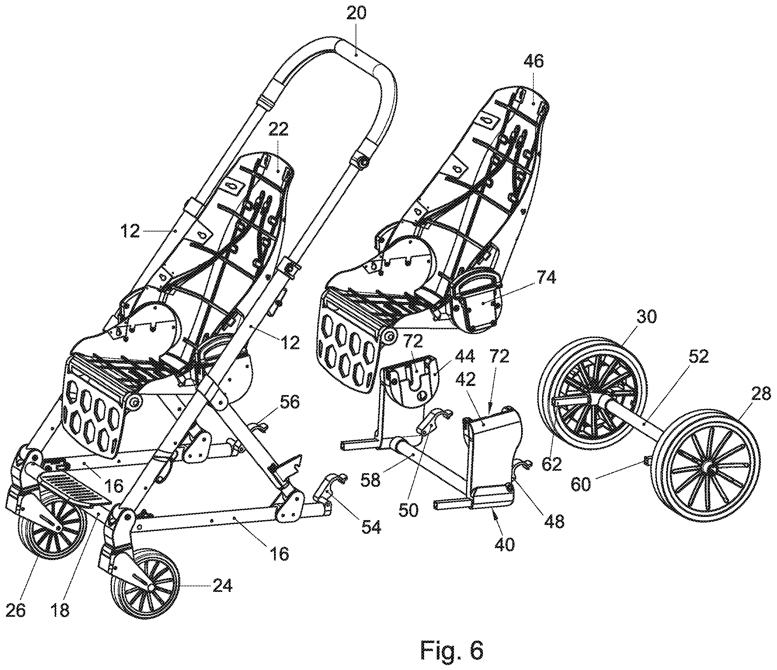

Figs. 5 and 6 show an example of an embodiment of an adapter assembly 40. The adapter assembly 40 comprises at least one receiving unit 42, 44 for an accessory 46, such as a second seat, a cot, a car seat, a baggage box, a basket or a step up board. The adapter assembly 40 further comprises a fastening provision 48, 50 for the rear wheel assemblies 28, 30. In an alternative embodiment of the invention, the adapter assembly 40 can comprise its own set of rear wheel assemblies. In this latter case, the removed rear wheel assemblies 28, 30 are not used when the adapter assembly 40 and the accessory 46 are part of the stroller 10. A distance between the rotation axis L_{front wheels} of the at least one front wheel assembly 24, 26 and a rotation axis L_{adapter wheels} of the rear wheel assemblies 28, 30 connected to the adapter assembly 40, is referred to as second wheelbase W2 (see Fig. 9). Characteristically, the second wheelbase W2 is greater than the first wheelbase W1. This clearly appears from a comparison of the two conditions of the exemplary embodiment which are shown in the side views in Figs. 8 and 9. As a result, also when the accessory 46, such as a second seat, a cot, a car seat, a baggage box, a basket or a step up board, is part of the stroller 10, an excellent stability is obtained. The risk of the stroller 10 tilting inadvertently backwards is considerably reduced in that also when two infants are transported in the stroller, the common center of gravity of the infants is between the front wheel assemblies 24, 26 and the rear wheel assemblies 28, 30. As the stroller 10 only has three or four wheel assemblies, proper driving performance and good maneuverability are maintained. Owing to the presence of the at least one receiving unit 42, 44, the same adapter assembly 40 can be used for mounting various accessories 46 thereon. In the exemplary embodiment shown, as an accessory, a second seat 46 is shown. As stated, the adapter assembly 40 can also serve for fastening thereto a cot, a car seat, a baggage box, a basket or a step up board.

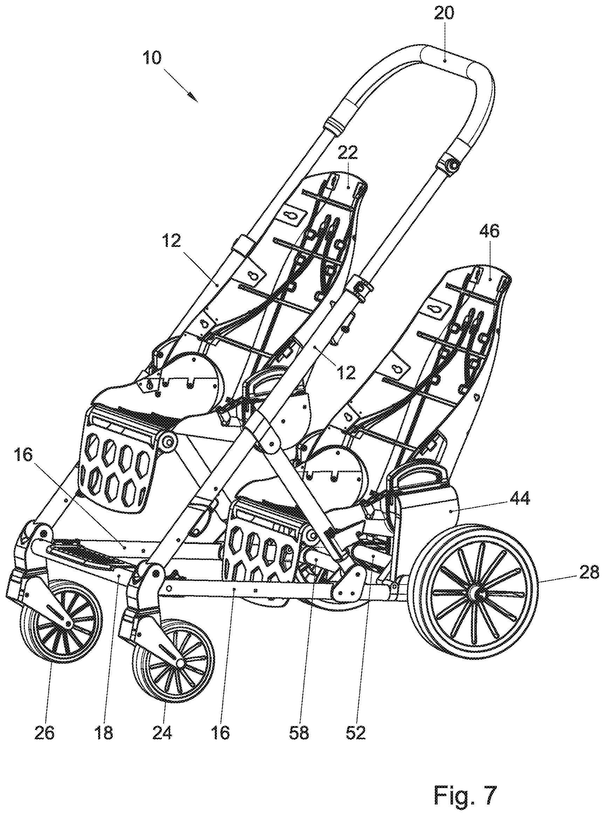

Fig. 7 shows the second condition of the stroller 10 in which the adapter assembly 40 is connected to the frame 12-20 and in which the rear wheel assemblies 28, 30 are connected to the adapter assembly 40. Further, in Fig. 7, the accessory 46, in an embodiment as second seat, is placed on the adapter assembly 40. In particular in Fig. 9, it is clearly visible that the center of gravity of an infant in the first seat 22 and the center of gravity of an infant in the second seat 46 is between the front wheel assemblies 24, 26 and the rear wheel assemblies 28, 30. Even if the foremost infant were to step from his/her front seat 22, the stroller 10 does not tilt backwards.

In one embodiment, of which an example is shown in the figures, the rear wheel assemblies 28, 30 can be connected to a wheel crossbar 52, which wheel crossbar 52 is detachably connectable to the frame 12-20 by a first snap connection 54, 56.

In an alternative embodiment, the rear wheel assemblies 28, 30 could also be provided with axle stubs which can be inserted into bearing openings in the frame 12-20. The embodiment with wheel crossbar 52 has the advantage of a quicker assembly and disassembly of the rear wheel assemblies 28, 30 as both rear wheel assemblies 28, 30 can be connected to the frame 12-20 and be detached from the frame 12-20 in one operation. What is more, the wheel crossbar 52 provides the frame 12-20 with additional strength in that it forms a cross connection. In an alternative variant, it is also possible that the adapter assembly comprises two separate adapter parts which are connected to the frame 12-20 and that to these separate adapter parts rear wheel assemblies are, or are to be, connected. These adapter parts could also form the two receiving units in which the accessory can be placed. However, in this variant also, it is important that after the adapter parts are mounted the wheelbase W2 is greater than the wheelbase W1 in the first condition of the stroller 10 without adapter parts.

In one embodiment, of which an example is shown in the figures, the wheel crossbar 52 can be detachably connectable to the adapter assembly 40 by the fastening provision 48, 50 which is designed as a second snap connection 48, 50. This second snap connection is clearly visible in Figs. 5 and 6.

In one embodiment, of which an example is shown in the figures, the adapter assembly 40 can comprise at least one receiving unit 42, 44 which is connected to an adapter assembly crossbar 58. The adapter assembly crossbar 58 may then be detachably connectable to the frame 12-20 by a snap connection 54, 56. In the exemplary embodiment shown, the adapter assembly 40 comprises two receiving units 42, 44. However, a single receiving unit is also possible or more than two receiving units are also an option.

In one embodiment, of which an example is shown in the figures, the snap connection 54, 56 for detachably connecting the adapter assembly crossbar 58 to the frame 12-20 can be formed by the first snap connection 54, 56 which also serves for connecting the wheel crossbar 52 to the frame 12-20. This is simple and favorable from a viewpoint of costs. However, in an alternative embodiment, also a snap connection of a different type could be used. An alternative snap connection can be formed by generally known telescopically extensible and compressible, slideable tubes, the outer tube provided with a series of spaced apart openings and the inner tube provided with a compressible ball biased towards an outermost position, which can snap into the openings. The advantage of the exemplary embodiment shown is a great stability with which a virtually clearance free connection is obtained.

According to a further elaboration of the invention, of which an example is shown in the figures, the first snap connection 54,56 can comprise two brackets 54, 56 pivotably connected to the frame 12-20. Each bracket 54, 56 comprises a substantially hook-shaped end 54a, 56a which has some elasticity and which can be snapped over the wheel crossbar 52 when the rear wheel assemblies 28,30 are mounted to the frame 12, 20. The brackets 54, 56 can further be snapped in a corresponding manner over the adapter assembly crossbar 58 when the adapter assembly 40 is mounted on the frame 12-20. The first snap connection 54, 56 thus has a double function, i.e. detachably connecting the rear wheel assemblies 28, 30 to the frame 12-20 and detachably connecting the adapter assembly 40 to the frame 12-20.

In one embodiment, of which an example is shown in the figures, the wheel crossbar 52 can comprise two parallel mounting bars 60, 62 extending perpendicularly to the wheel crossbar 52, and which are slideably receivable in associated openings 64, 66 in the frame 12-20 and which are slideably receivable in associated openings 68, 70 in the adapter assembly 40. These mounting bars 60, 62 provide a sturdy, demountable connection between the wheel crossbar 52 and the frame 12-20. Furthermore, the mounting bars 60, 62 provide a sturdy demountable connection between the wheel crossbar 52 and the adapter assembly 40.

According to an embodiment of the invention, of which an example is shown in the figures, the second snap connection 48, 50 can comprise two brackets 48, 50 pivotably connected to the adapter assembly 40. These brackets 48,50 too can each comprise a substantially hook-shaped end 48a, 50a having some elasticity and being snappable over the wheel crossbar 52 when the rear wheel assemblies 28, 30 are mounted on the adapter assembly 40.

By designing the second snap connection 48, 50 similarly to the first snap connection 54, 56 the user can learn the operation of the stroller 10 with minimal effort.

According to a further elaboration of the invention, of which an example is shown in the figures, it is possible that the at least one receiving unit 42, 44 comprises a receiving slot 72 in which a support bracket 74 is slideably receivable, which support bracket 74 is connected to the accessory 46 to be mounted, such as a second seat, a cot, a car seat, a baggage box, a basket or a step up board.

In one embodiment, of which an example is shown in the figures, the configuration of the adapter assembly 40 with the accessory 46 is designed such that in mounted condition, the accessory 46 is located behind the first seat 22.

Figs. 1, 3, 6, and 7 show the successive steps of the conversion of the stroller 10 from the first condition with one seat 22 to the second condition with a seat 22 and an accessory 46, in this case a second seat 46. In Fig. 1, the wheel crossbar 52 is still connected to the frame 12-20. The brackets 54, 56 of the first snap connection are already folded up so that the rear wheel assemblies 28, 30 can be detached with the wheel crossbar 52 from the frame 12-20. Clearly, in normal use of the stroller 10 in the first condition, these brackets 54, 56 are folded down and the hook-shaped end 54a, 56a is in engagement with the wheel crossbar 52. In Fig. 3, the mounting bars 60, 62 are pulled from the associated openings 64, 66 in the frame 12-20 and the wheel crossbar 52 with the rear wheel assemblies 28, 30 connected thereto is taken from the frame 12-20. Fig. 6 shows the adapter assembly 40, the accessory 46 in the embodiment of the second seat, and the wheel crossbar 52 with mounting bars 60, 62 in a condition prior to mounting. Next, Fig. 7 shows the stroller 10 in the second condition in which the adapter assembly 40, the accessory 46 and the rear wheel assemblies 28, 30 with the wheel crossbar 52 are mounted. As already stated hereinabove, instead of a seat, the accessory 46 could also be formed by a cot, a car seat, a baggage box, a basket or a step up board.

With the invention, a stroller 10 is provided with relatively low initial purchase costs. In the first condition, the stroller 10 has the properties of a normal single stroller, also as regards appearance, design, weight and costs. At relatively low cost, the stroller 10 is expandable into a double stroller 10 which has first rate driving performance and excellent stability, which is of great importance from a viewpoint of safety.

While the invention has been represented and described in detail with reference to the drawing, this drawing and the description should be considered to be merely an example. The invention is not limited to the embodiments described. Reference numerals in the claims should not be construed as limitations of the claims but serve merely for clarification.

## Claims

1. A stroller (10) comprising:
• a collapsible frame (12-20) which comprises a push bar (20);
• a seat (22) which is mounted on the frame (12-20);
• at least one front wheel assembly (24, 26) which is connected to the frame (12-20);
• at least two rear wheel assemblies (28, 30) which, in a first condition of the stroller (10), are connected to the frame (10-20), wherein a distance between a rotation axis (L_{front wheels}) of the at least one front wheel assembly (24, 26) and a rotation axis (L_{rear wheels}) of the rear wheel assemblies (28, 30) is referred to as first wheelbase (W₁), wherein the rear wheel assemblies are detachably connected to the frame (12-20);
• an adapter assembly (40) which is connectable to the frame (12-20) when the rear wheel assemblies (28, 30) are detached from the frame (12-20) for bringing the stroller (10) into a second condition, which adapter assembly (40) comprises:
∘ at least one receiving unit (42, 44) for an accessory (46), such as, for instance, a second seat, a cot, a car seat, a baggage box, a basket or a step up board;
and wherein the adapter assembly (40) comprises
∘ a fastening provision (48, 50) for the rear wheel assemblies (28, 30); or
∘ its own set of rear wheel assemblies,
wherein, in the second condition of the stroller (10), a distance between the rotation axis (L_{front wheels}) of the at least one front wheel assembly (24,26) and a rotation axis (L_{adapter wheels}) of the rear wheel assemblies (28, 30) connected to the adapter assembly (40) is referred to as second wheelbase (W₂), wherein the second wheelbase (W₂) is greater than the first wheelbase (W₁), **characterized in that** the stroller (10) in both the first condition and the second condition has only two rear wheel assemblies and one or two front wheel assemblies so that the stroller (10) only has three or four wheel assemblies.

2. The stroller according to claim 1, wherein the rear wheel assemblies (28, 30) are connected to a wheel crossbar (52), which wheel crossbar (52) is detachably connectable to the frame (12-20) by a first snap connection (54, 56).

3. The stroller according to claim 2, wherein the wheel crossbar (52) is detachably connectable to the adapter assembly (40) by the fastening provision (48, 50) which is designed as a second snap connection (48, 50).

4. The stroller according to claims 2 or 3, wherein the adapter assembly (40) comprises at least one receiving unit (42, 44) which is connected to an adapter assembly crossbar (58), which adapter assembly crossbar (58) is detachably connectable to the frame (12-20) by a snap connection (54, 56).

5. The stroller according to claim 4, wherein the snap connection (54, 56) for detachably connecting the adapter assembly crossbar (58) to the frame (12-20) is the first snap connection (54, 56).

6. The stroller according to claim 5, wherein the first snap connection (54, 56) comprises two brackets (54, 56) pivotably connected to the frame (12-20), which each comprise a substantially hook-shaped end (54a, 56a) which has some elasticity and which is snappable over the wheel crossbar (52) when the rear wheel assemblies (28, 30) are mounted on the frame (12-20), and which is snappable over the adapter assembly crossbar (58) when the adapter assembly (40) is mounted on the frame (12-20).

7. The stroller according to any one of claims 2-6, wherein the wheel crossbar (52) comprises two parallel mounting bars (60, 62) extending perpendicularly to the wheel crossbar (52), and which are slideably receivable in associated openings (64, 66) in the frame (12-20) and which are slideably receivable in associated openings (68, 70) in the adapter assembly (40).

8. The stroller according to claim 7, wherein the stroller (10) also has the features of claims 3 and 4, wherein the second snap connection (48, 50) comprises two brackets (48, 50) pivotably connected to the adapter assembly (40) and which each comprise a substantially hook-shaped end (48a, 50a) which has some elasticity and which is snappable over the wheel crossbar (52) when the rear wheel assemblies (28, 30) are mounted on the adapter assembly (40).

9. The stroller according to any one of the preceding claims, wherein the at least one receiving unit (42, 44) comprises a receiving slot (72) in which a support bracket (74) is slideably receivable, which support bracket (74) is connected to the accessory (46) to be mounted, such as a second seat, a cot, a car seat, a baggage box, a basket or a step up board.

10. The stroller according to any one of the preceding claims, wherein the configuration of the adapter assembly (40) with the accessory (46) is designed such that the accessory (46) in mounted condition is located behind the first seat (22).

## Patentansprüche

1. Kinderwagen (10), umfassend:
• einen zusammenklappbaren Rahmen (12-20), der eine Drückstange (20) umfasst;
• einen Sitz (22), der an dem Rahmen (12-20) montiert ist;
• mindestens eine Vorderradanordnung (24, 26), die mit dem Rahmen (12-20) verbunden ist;
• mindestens zwei Vorderradanordnungen (28, 30), die in einem ersten Zustand des Kinderwagens (10) mit dem Rahmen (10-20) verbunden sind, wobei ein Abstand zwischen einer Drehachse (L_{front wheel}) der mindestens einen Vorderradanordnung (24, 26) und eine Drehachse (L_{rear wheels}) der Hinterradanordnungen (28, 30) als erster Radstand (W₁) bezeichnet wird, wobei die Hinterradanordnungen abnehmbar mit dem Rahmen (12-20) verbunden sind;
• eine Adapteranordnung (40), die mit dem Rahmen (12-20) verbunden werden kann, wenn die Hinterradanordnungen (28, 30) vom Rahmen (12-20) abgenommen sind, um den Kinderwagen (10) in einen zweiten Zustand zu bringen, welche Adapteranordnung (40) Folgendes umfasst:
o mindestens eine Aufnahmeeinheit (42, 44) für ein Zubehör (46) wie etwa zum Beispiel einen zweiten Sitz, eine Babyschale, einen Autositz, eine Gepäckbox, einen Korb oder ein Trittbrett;
und wobei die Adapteranordnung (40) Folgendes umfasst:
o eine Befestigungsvorrichtung (48, 50) für die Hinterradanordnungen (28, 30); oder
o ihren eigenen Satz Hinterradanordnungen,
wobei im zweiten Zustand des Kinderwagens (10) ein Abstand zwischen der Drehachse (L_{front wheels}) der mindestens einen Vorderradanordnung (24, 26) und einer Drehachse (L_{adapter wheels}) der Hinterradanordnungen (28, 30), verbunden mit der Adapteranordnung (40), als zweiter Radstand (W2) bezeichnet wird, wobei der zweite Radstand (W₂) größer ist als der erste Radstand (W₁), **dadurch gekennzeichnet, dass** der Kinderwagen (10) in sowohl dem ersten Zustand als auch dem zweiten Zustand nur zwei Hinterradanordnungen und eine oder zwei Vorderradanordnungen hat, sodass der Kinderwagen (10) nur drei oder vier Radanordnungen hat.

2. Kinderwagen nach Anspruch 1, wobei die Hinterradanordnungen (28, 30) mit einer Radquerstange (52) verbunden sind, welche Radquerstange (52) durch eine erste Schnappverbindung (54-56) abnehmbar mit dem Rahmen (12-20) verbunden werden kann.

3. Kinderwagen nach Anspruch 2, wobei die Radquerstange (52) durch die Befestigungsvorrichtung (48, 50), die als eine zweite Schnappverbindung (48, 50) konzipiert ist, abnehmbar mit der Adapteranordnung (40) verbunden werden kann.

4. Kinderwagen nach den Ansprüchen 2 oder 3, wobei die Adapteranordnung (40) mindestens eine Aufnahmeeinheit (42, 44) umfasst, die mit einer Adapteranordnungsquerstange (58) verbunden werden kann, welche Adapteranordnungsquerstange (58) durch eine Schnappverbindung (54, 56) abnehmbar mit dem Rahmen (12-20) verbunden werden kann.

5. Kinderwagen nach Anspruch 4, wobei die Schnappverbindung (54, 56) zum abnehmbaren Verbinden der Adapteranordnungsquerstange (58) mit dem Rahmen (12-20) die erste Schnappverbindung (54, 56) ist.

6. Kinderwagen nach Anspruch 5, wobei die erste Schnappverbindung (54, 56) zwei drehbar mit dem Rahmen (12-20) verbundene Klammern (54, 56) umfasst, von denen jede ein im Wesentlichen hakenförmiges Ende (54a, 56a) aufweist, das eine gewisse Elastizität hat und das über der Radquerstange (52) eingeschnappt werden kann, wenn die Hinterradanordnungen (28, 30) am Rahmen (12-20) montiert sind, und das über der Adapteranordnungsquerstange (58) eingeschnappt werden kann, wenn die Adapteranordnung (40) an dem Rahmen (12-20) montiert ist.

7. Kinderwagen nach einem der Ansprüche 2-6, wobei die Radquerstange (52) zwei parallele Montagestäbe (60, 62) umfasst, die senkrecht zu der Radquerstange (52) verlaufen und die gleitend in zugehörigen Öffnungen (64, 66) in dem Rahmen (12-20) aufnehmbar sind und die gleitend in zugehörigen Öffnungen (68, 70) in der Adapteranordnung (40) aufnehmbar sind.

8. Kinderwagen nach Anspruch 7, wobei der Kinderwagen (10) auch die Merkmale der Ansprüche 3 und 4 aufweist, wobei die zweite Schnappverbindung (48, 50) zwei Klammern (48, 50) aufweist, die drehbar mit der Adapteranordnung (40) verbunden sind und von denen jede ein im Wesentlichen hakenförmiges Ende (48a, 50a) umfasst, das eine gewisse Elastizität aufweist und das über der Radquerstange (52) eingeschnappt werden kann, wenn die Hinterradanordnungen (28, 30) an der Adapteranordnung (40) montiert sind.

9. Kinderwagen nach einem der vorhergehenden Ansprüche, wobei die mindestens eine Aufnahmeeinheit (42, 44) einen Aufnahmeschlitz (72) umfasst, in dem eine Stützklammer (74) gleitend aufgenommen werden kann, welche Stützklammer (74) mit dem zu montierenden Zubehör (46), wie etwa einem zweiten Sitz, einer Babyschale, einem Autositz, einer Gepäckbox, einem Korb oder einem Trittbrett, verbunden ist.

10. Kinderwagen nach einem der vorhergehenden Ansprüche, wobei die Konfiguration der Adapteranordnung (40) mit dem Zubehör (46) derart konzipiert ist, dass das Zubehör (46) im montierten Zustand sich hinter dem ersten Sitz (22) befindet.

## Revendications

1. Poussette (10) comprenant :
un bâti pliable (12-20) qui comprend une barre de poussée (20) ;
un siège (22) qui est monté sur le bâti (12-20) ;
au moins un ensemble de roue avant (24, 26) qui est raccordé au bâti (12-20) ;
au moins deux ensembles de roue arrière (28, 30) qui, dans une première condition de la poussette (10), sont raccordés au bâti (10-20), dans laquelle une distance entre un axe de rotation (L_{front wheels}) du au moins un ensemble de roue avant (24, 26) et un axe de rotation (L_{rear wheels}) des ensembles de roue arrière (28, 30) est désignée comme étant une première base de roue (W₁), dans laquelle les ensembles de roue arrière sont raccordés de manière détachable au bâti (12-20) ;
un ensemble d'adaptateur (40) qui peut être raccordé au bâti (12-20) lorsque les ensembles de roue arrière (28, 30) sont détachés du bâti (12-20) pour amener la poussette (10) dans une seconde condition, lequel ensemble d'adaptateur (40) comprend :
au moins une unité de réception (42, 44) pour un accessoire (46), tel que par exemple un second siège, un lit d'enfant, un siège de voiture, un bagage, un panier ou une planche ;
et dans laquelle l'ensemble d'adaptateur (40) comprend :
une provision de fixation (48, 50) pour les ensembles de roue arrière (28, 30) ; ou bien
son propre jeu d'ensembles de roue arrière,
dans laquelle, dans la seconde condition de la poussette (10), une distance entre l'axe de rotation (L_{front wheels}) du au moins un ensemble de roue avant (24, 26) et un axe de rotation (L_{adapter wheels}) des ensembles de roue arrière (28, 30) raccordés à l'ensemble d'adaptateur (40) est désignée comme étant la seconde base de roue (W₂), dans laquelle la seconde base de roue (W₂) est supérieure à la première base de roue (W₁),
**caractérisée en ce que** :
la poussette (10) à la fois dans la première condition et dans la seconde condition a uniquement deux ensembles de roue arrière et un ou deux ensembles de roue avant de sorte que la poussette (10) a uniquement trois ou quatre ensembles de roue.

2. Poussette selon la revendication 1, dans laquelle les ensembles de roue arrière (28, 30) sont raccordés à une traverse de roue (52), laquelle traverse de roue (52) peut être raccordée de manière détachable au bâti (12-20) par un premier raccordement par encliquetage (54, 56).

3. Poussette selon la revendication 2, dans laquelle la traverse de roue (52) peut être raccordée de manière détachable à l'ensemble d'adaptateur (40) par la provision de fixation (48, 50) qui est conçue comme un second raccordement par encliquetage (48, 50).

4. Poussette selon les revendications 2 ou 3, dans laquelle l'ensemble d'adaptateur (40) comprend au moins une unité de réception (42, 44) qui est raccordée à une traverse d'ensemble d'adaptateur (58), laquelle traverse d'ensemble d'adaptateur (58) peut être raccordée, de manière détachable, au bâti (12-20) par un raccordement par encliquetage (54, 56).

5. Poussette selon la revendication 4, dans laquelle le raccordement par encliquetage (54, 56) pour raccorder, de manière détachable, la traverse d'ensemble d'adaptateur (58) au bâti (12-20) est le premier raccordement par encliquetage (54, 56).

6. Poussette selon la revendication 5, dans laquelle le premier raccordement par encliquetage (54, 56) comprend deux consoles (54, 56) raccordées, de manière pivotante, au bâti (12-20), qui comprennent chacune une extrémité sensiblement en forme de crochet (54a, 56a) qui présente une certaine élasticité et qui peut être encliquetée sur la traverse de roue (52) lorsque les ensembles de roue arrière (28, 30) sont montés sur le bâti (12-20) et qui peut être encliquetée sur la traverse d'ensemble d'adaptateur (58) lorsque l'ensemble d'adaptateur (40) est monté sur le bâti (12-20) .

7. Poussette selon l'une quelconque des revendications 2 à 6, dans laquelle la traverse de roue (52) comprend deux barres de montage parallèles (60, 62) s'étendant de manière perpendiculaire à la traverse de roue (52) et qui peuvent être reçues de manière coulissante dans des ouvertures (64, 66) associées dans le bâti (12-20) et qui peuvent être reçues de manière coulissante dans des ouvertures (68, 70) associées dans l'ensemble d'adaptateur (40).

8. Poussette selon la revendication 7, dans laquelle la poussette (10) a également les caractéristiques des revendications 3 et 4, dans laquelle le second raccordement par encliquetage (48, 50) comprend deux consoles (48, 50) raccordées de manière pivotante à l'ensemble d'adaptateur (40) et qui comprennent chacune une extrémité sensiblement en forme de crochet (48a, 50a) qui présente une certaine élasticité et qui peut être encliquetée sur la traverse de roue (52) lorsque les ensembles de roue arrière (28, 30) sont montés sur l'ensemble d'adaptateur (40).

9. Poussette selon l'une quelconque des revendications précédentes, dans laquelle la au moins une unité de réception (42, 44) comprend une fente de réception (72) dans laquelle une console de support (74) peut être reçue de manière coulissante, laquelle console de support (74) est raccordée à l'accessoire (46) à monter, tel qu'un second siège, un lit d'enfant, un siège de voiture, un bagage, un panier ou une planche.

10. Poussette selon l'une quelconque des revendications précédentes, dans laquelle la configuration de l'ensemble d'adaptateur (40) avec l'accessoire (46) est conçue de sorte que l'accessoire (46), dans la condition montée, est positionné derrière le premier siège (22).
